# EUROPÄISCHE PATENTANMELDUNG

(11) **EP 2 030 716 A1**
(43) Veröffentlichungstag der Anmeldung: **04.03.2009**
(21) Anmeldenummer: 08015179.8
(22) Anmeldetag: 28.08.2008
(51) Int. Cl.: B23K 9/12, B23K 9/16, B23K 9/29, F23D 14/54

(54) **Strömungsdüse für ein Schweissgerät mit einem dreiarmigen Stern, je Arm aufweisend einen Gaslängskanal**

(30) Priorität: 28.08.2007 RU 2007132496
(71) Anmelder: Chubenko, Evgenij Fedorovich, 344004 Rostov-na-Donu (RU); Chubenko, Konstantin Evgenevich, 344004 Rostov-na-Donu (RU)
(72) Erfinder: Chubenko, Evgenij F., 344004 Rostov-na-Donu (RU); Chubenko, Konstantin E., 344004 Rostov-na-Donu (RU)
(74) Vertreter: Jeck, Anton

(57) **Zusammenfassung**

Die Erfindung bezieht sich auf eine Strömungsdüse für ein Schweißgerät mit einem Nichtarbeitsteil mit Gewinde und einem Arbeitsteil in der Form eines dreiarmigen Sterns mit einem Zentralkanal (3) zur Führung der Abschmelzelektrode, wobei der Arbeitsteil mittels Verformung eines Rohrwerkstückes gefertigt ist. Die Strömungsdüse kann dadurch einfach hergestellt und in den Schwanenhals eines Schweißgeräts und dabei der Schutzgasverbrauch beim Schweißen vermindert werden, dass im Arbeitsteil drei Gaslängskanäle (4) ausgebildet sind, die mit dem Zentralkanal (3) gleichlaufend sind.

## Beschreibung

Die Erfindung bezieht sich auf eine Strömungsdüse für ein Schweißgerät nach dem Oberbegriff des Anspruchs 1.

Eine derartige Strömungsdüse kann insbesondere beim Metallschutzgas-Lichtbogenschweißen verwendet und in das Schweißgerät eingesetzt werden.

Es ist eine Strömungsdüse bekannt (Potap'yevsky A.G. Metallschutzgasschweißen, M., Maschinostrojenije, 1974, S. 198 - 200, Abb. 75w), deren Arbeitsteil als ein durchbohrter Kupferbauteil ausgebildet ist. Der Mangel dieser bekannten Strömungsdüse ist die verfahrenstechnische Kompliziertheit beim Bohren einer relativ tiefen Bohrung mit kleinem Durchmesser im Kupferbauteil sowie der erhöhte Schutzgasverbrauch beim Schweißen. Dies hängt damit zusammen, da das Schutzgas über eine Gasdüse zugeführt wird, deren Durchmesser den Durchmesser der Strömungsdüse und des Schweißbereiches um das 2- bis 3-fache überschreitet.

Es ist eine andere Strömungsdüse bekannt (Patent der UdSSR Nr. 1802769, KI. B23K 9/167, veröffentlicht 15.03.93, Blatt Nr. 10), deren Arbeitsteil als ein dreiarmiger Stern ausgebildet ist. Der Zentralkanal dieser Strömungsdüse ist mittels Verformung eines Rohrwerkstücks in einem Dreibackenfutter hergestellt. Das Rohrwerkstück ist mit einem kalibrierten Drähtchen versehen, das vor der Verformung eingesteckt wurde. Der Mangel dieser Konstruktion ist ein erhöhter Schutzgasverbrauch beim Schweißen.

Ausgehend von diesem vorstehend genannten Stand der Technik liegt der Erfindung die Aufgabe zugrunde eine Strömungsdüse zu schaffen, die einen verminderten Schutzgasverbrauch beim Schweißen aufweist und dabei die Konstruktion so vereinfacht, dass die Strömungsdüse einfach hergestellt und in ein Schweißgerät optimal eingebaut werden kann.

Die gestellte Aufgabe wird durch die Maßnahmen des Anspruchs 1 gelöst.

Weitere zweckmäßige und vorteilhafte Maßnahmen der Erfindung gehen aus den Unteransprüchen hervor.

Der entscheidende Vorteil der Erfindung ist die einfache Herstellung der Strömungsdüse durch Verformung eines Rohrwerkstücks, wobei der Nichtarbeitsteil den Einbau in den Schwanenhals eines Schweißgeräts vereinfacht und der Arbeitsteil die Gaslängskanäle für das Schutzgas und den Zentralkanal mit der an diesem herausgeführten Arbeitselektrode unmittelbar in die Brennzone des Schweißbogens des Schweißgeräts gesichtet werden kann.

Diese Ausgestaltung der neuen Strömungsdüse ist besonders vorteilhaft, wenn zum Schweißen das teuere Schutzgas Argon verwendet wird.

Ein Ausführungsbeispiel der Erfindung ist in den Zeichnungen schematisch dargestellt. Es zeigen:

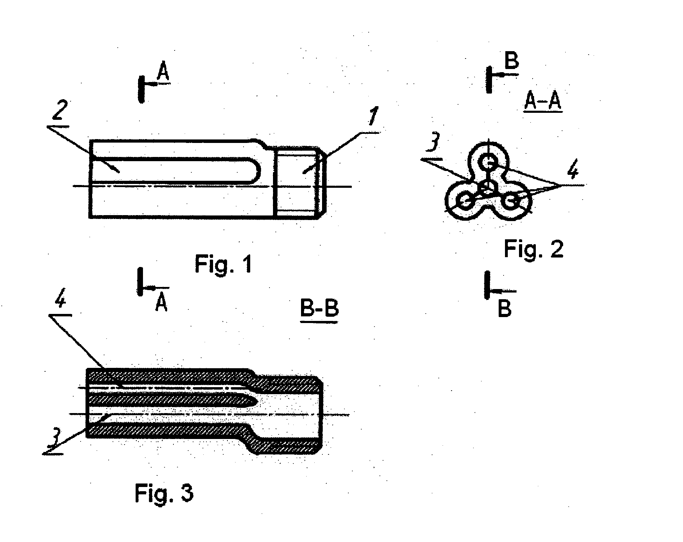

- Fig. 1: eine Ansicht der Strömungsdüse,
- Fig. 2: einen Querschnitt des Arbeitsteils der Strömungsdüse entlang der Linie A-A der Fig. 1 und
- Fig. 3: einen Schnitt entlang der Düsenachse B-B.

Die Strömungsdüse besteht aus einem Nichtarbeitsteil 1 mit Gewinde und einem Arbeitsteil 2. Das Schnittprofil des Arbeitsteils 2 entspricht dem Schnitt A-A. Der Querschnitt des Zentralkanals 3 und der Gaslängskanäle 4 ist im Schnitt B-B abgebildet.

Die Strömungsdüse ist mittels Verformung eines Rohrwerkstücks im Dreibackenfutter gefertigt. Vorher wurden in das Rohrwerkstück ein kalibriertes Drähtchen und drei Drähtchen zur Bildung der Gaslängskanäle eingesteckt. Nach der Formgebung werden die Drähtchen aus dem verformten Rohrwerkstück herausgezogen und somit entfernt.

Die Strömungsdüse wird in folgender Weise angewendet:
Das Nichtarbeitsteil 1 mit dem Gewinde wird in den Schwanenhals des Griffs eines Schweißgeräts eingeschraubt. Der Schweißdraht als Abschmelzelektrode verläuft im Zentralkanal 3 des Arbeitsteils 2. Das Schutzgas läuft über die drei Gaslängskanäle 4 unmittelbar in die Brennzone des Schweißbogens. Auf diese Weise wird der Schutzgasverbrauch vermindert. Dies ist besonders wichtig, wenn als Schutzgas das kostspielige Argon verwendet wird.

## Patentansprüche

1. Strömungsdüse für ein Schweißgerät mit einem Nichtarbeitsteil (1) mit Gewinde und einem Arbeitsteil (2) in der Form eines dreiarmigen Sterns mit einem Zentralkanal (3) zur Führung der Abschmelzelektrode, wobei der Arbeitsteil (2) mittels Verformung eines Rohrwerkstückes gefertigt ist,
**dadurch gekennzeichnet,**
**dass** im Arbeitsteil (2) drei Gaslängskanäle (4) ausgebildet sind, die mit dem Zentralkanal (3) gleichlaufend sind.

2. Strömungsdüse nach Anspruch 1,
**dadurch gekennzeichnet,**
**dass** das Nichtarbeitsteil (1) mit dem Gewinde in einem Schwanenhals des Schweißgeräts eingeschraubt ist.

3. Strömungsdüse nach Anspruch 1 und 2,
**dadurch gekennzeichnet,**
**dass** das Nichtarbeitsteil (1) mit einer zentralen Durchgangsöffnung versehen ist, die beim Übergang in das Arbeitsteil (2) in die drei Gaslängskanäle (4) übergeht.

4. Strömungsdüse nach einem der Ansprüche 1 bis 3,
**dadurch gekennzeichnet,**
**dass** die Gaslängskanäle (4) im Arbeitsteil (2) im Winkel von 120° symmetrisch um den Zentralkanal (4) angeordnet sind.

5. Strömungsdüse nach einem der Ansprüche 1 bis 4,
**dadurch gekennzeichnet,**
**dass** das Ende des Arbeitsteils (2) mit den drei Ausgängen der Gaslängskanäle (4) und der aus dem Zentralkanal (4) herausgeführten Arbeitselektrode unmittelbar in die Brennzone des Schweißbogens des Schweißgeräts gerichtet sind.

6. Strömungsdüse nach einem der Ansprüche 1 bis 5,
**dadurch gekennzeichnet,**
**dass** als Schutzgas Argon verwendet ist.
